# EUROPÄISCHE PATENTSCHRIFT

(11) **EP 1 599 345 B1**
(45) Veröffentlichungstag und Bekanntmachung des Hinweises auf die Patenterteilung: **29.08.2007**
(21) Anmeldenummer: 04713875.5
(22) Anmeldetag: 24.02.2004
(51) Int. Cl.: B42D 15/00

(54) **SICHERHEITSELEMENT MIT EINER GITTERSTRUKTUR**
SAFETY ELEMENT
ELEMENT DE SECURITE

(30) Priorität: 26.02.2003 DE 10308327
(43) Veröffentlichungstag der Anmeldung: 30.11.2005
(73) Patentinhaber: Giesecke & Devrient GmbH, 81667 München (DE)
(72) Erfinder: KAULE, Wittich, 82275 Emmering (DE)
(74) Vertreter: Klunker . Schmitt-Nilson . Hirsch
(86) Internationale Anmeldenummer: PCT/EP2004/001818
(87) Internationale Veröffentlichungsnummer: WO 2004/077468

(56) Entgegenhaltungen:
- EP-A- 0 712 012
- WO-A-99/59036
- WO-A-02/100654
- DE-A- 10 226 115
- US-A- 5 032 003
- US-A- 5 428 479
- W.R. TOMPKIN, A. SCHILLING, C. WEITENEDER, H.P. HERZIG: "Zero-order gratings for optically variable devices" SPIE, Bd. 4677, 24. Januar 2002 (2002-01-24), - 24. Januar 2002 (2002-01-24) Seiten 227-237, XP002302559 USA
- R. STAUB, W.R. TOMPKIN, J.-F. MOSER: "Combination gratings" SPIE, Bd. 2689, 1. Februar 1996 (1996-02-01), - 1. Februar 1996 (1996-02-01) Seiten 292-299, XP002302560 USA

## Beschreibung

Die Erfindung betrifft eine Gitterstruktur zur Absicherung von Wertgegenständen, die wenigstens einen ersten Teilbereich mit einer Gitterkonstante aufweist, die kleiner als ist als die Wellenlänge, bei welcher der Teilbereich betrachtet wird, wobei die Gitterstruktur in diesem Teilbereich in Form einer Reliefstruktur mit einer definierten Reliefhöhe vorliegt so dass bei Betrachtung in einem bestimmten Spektralbereich ein Nullte-Ordnung-Gitterbild beobachtbar ist. Die Erfindung betrifft ferner ein Sicherheitselement sowie ein Sicherheitsdokument mit einer derartigen Gitterstruktur.

Optisch variable Elemente, wie Hologramme oder Beugungsgitterbilder werden aufgrund ihrer mit dem Betrachtungswinkel variierenden optischen Eigenschaften häufig als Fälschungs- bzw. Kopierschutz für Wertdokumente, wie Kreditkarten, Banknoten oder dergleichen, aber auch zur Produktsicherung beliebiger Produktverpackungen verwendet.

Die Beugungsgitterbilder können in der Praxis in Nullte-Ordnung-Gitterbilder und Erste-Ordnung-Gitterbilder unterteilt werden. Eine theoretische Untersuchung einer Unterteilung in Erste-Ordnung-Gitterbilder ist z.B. in W.R. Tompkin et. al. "Zero-Order-Gratings for Optically Variable Devices" SPIE, Bd. 4677, Seite 227-237, enthalten.

Erste-Ordnung-Gitterbilder haben Gitterkonstanten, die größer sind als die Wellenlänge, bei welcher das Erste-Ordnung-Gitterbild betrachtet werden soll. Da die Gitterbilder in aller Regel im visuellen Spektralbereich betrachtet werden, liegen die Gitterkonstanten hierbei in der Größenordnung von 1 µm, Bei diesen Beugungsgittern entspricht die nullte Ordnung dem klassischen reflektierten Strahl. D.h., bei Betrachtung des Beugungsgitters mit weißem Licht sind in der nullten Ordnung keine scharfen Informationen zu erkennen, da alle Wellenlängen reflektiert werden und sich überlagern. Die Aufnahmegeometrie wird für Erste-Ordnung-Gitterbilder daher so gewählt, dass bei weitgehend senkrechter Betrachtung die erste Ordnung des Beugungsgitters erkannt wird. Die Farbvariabilität entsteht dabei durch die unterschiedliche Lage der ersten bzw, n-ten Beugungsordnungen für die einzelnen Wellenlängen. Der optische, als Echtheitsmerkmal genutzte Effekt beruht bei Erste-Ordnung-Gitterbildern somit in erster Linie auf der Gitterkonstanten, während das Gitterprofil bzw. die Tiefe des Gitterprofils unwesentlich sind. Diese Parameter beeinflussen lediglich die Intensität.

Im Gegensatz hierzu ist für den optischen Effekt von Nullte-Ordnung-Gitterbildern gerade das Gitterprofil bzw. die Tiefe des Profils ausschlaggebend für die Farbvariabilität. Denn bei Nullte-Ordnung-Gitterbildern liegt die Gitterkonstante vorzugsweise unterhalb des visuellen Spektralbereichs. Üblicherweise wird sie < 400 nm gewählt. Wie bereits erwähnt, gibt es innerhalb der nullten Ordnung keine Farbvariabilität aufgrund der unterschiedlichen Lage der Beugungsmaxima. Die Farbvariabilität entsteht vielmehr durch einen zusätzlichen Interferenzeffekt, der als Interferenz "dünner Plättchen" bekannt ist. Hierbei ist die Tiefe des Beugungsstrukturreliefs ausschlaggebend, da aufgrund des Gangunterschiedes der an den unterschiedlichen Oberflächen des Reliefs reflektierten Lichtstrahlen für einzelne Wellenlängen destruktive Interferenz auftritt. Diese Wellenlängen fehlen damit im reflektierten Strahl der nullten Ordnung, so dass für das Auge die Mischfarbe der übrigen reflektierten Lichtwellenlängen sichtbar ist. Dieser Effekt wird umso deutlicher, wenn die Reliefstruktur der Beugungsstrukturen in einem dielektrischen Material mit einem großen Brechungsindex, beispielsweise n = 2 eingebracht ist, und diese Reliefstruktur in ein Kunststoffmaterial mit niedrigem Brechungsindex, beispielsweise n = 1,5 eingebettet wird.

Mit diesen Nullte-Ordnung-Gitterbildern können farbige Flächen erzeugt werden, die beim Drehen innerhalb der Ebene des Dokuments um 90° oder beim Kippen des Dokuments einen ausgeprägten Farbumschlag zeigen.

Die bekannten Nullte-Ordnung-Gitterbilder sind großflächig und bestehen aus sehr einfachen geometrischen Mustern, die relativ einfach zu imitieren sind.

Aus WO 02/100654 ist ein Sicherheitselement mit einem in einem Schichtverbund aus Kunststoff eingebetteten Flächenmuster bekannt, das sich aus einem Mosaik von Flächenelementen mit optisch wirksamen Strukturen zusammensetzt. Die Flächenelemente sind reflektierend und optisch variabel ausgebildet und aus vorbestimmten Beobachtungsrichtungen visuell erkennbar. Ein Teil des Flächenmusters ist entsprechend einem regelmäßigen Raster in gleich große Zellen eingeteilt, wobei jede Zelle mit einer einzigen Elementfläche oder mit einer Gruppe von identischen Teilflächen belegt ist. Hierbei sind im Raster wenigstens fünf Zellen pro mm vorgesehen. Die Elementflächen und die Teilflächen enthalten eine vom Mosaik des Flächenmusters unabhängige, optisch wirksame Struktur, die mit bloßem Auge nicht wahrnehmbare ist und eine versteckte Information in Form von grafischen bzw. alphanumerischen Zeichen bildet. Insbesondere sind die Zellen als Rechteck oder in Sechseckform ausgebildet. Bei dieser Aufteilung in Rechtecke oder Sechsecke entsteht jedoch eine Vielzahl von Grenzlinien. Diese Grenzlinien führen zu Streueffekten, die den primär gewünschten optischen Effekt überlagern und damit die Sichtbarkeit negativ beeinflussen.

Der Erfindung liegt daher die Aufgabe zugrunde, den Fälschungsschutz von Nullte-Ordnung-Gitterbildern zu erhöhen.

Diese Aufgabe wird durch die Merkmale der unabhängigen Ansprüche gelöst. Weiterbildungen sind Gegenstand der Unteransprüche.

Gemäß der Erfindung wird der Fälschungsschutz von Nullte-Ordnung-Gitterbildern dadurch erhöht, dass die zugehörige Gitterstruktur wenigstens einen Teilbereich aufweist, der im Umriss fein strukturiert ist. D.h., der Teilbereich weist in wenigstens einer Richtung eine Ausdehnung < 0,5 mm auf. Vorzugsweise liegt die Ausdehnung dieses Teilbereichs unterhalb des Auflösungsvermögens des Auges, insbesondere unterhalb 0,2 mm.

Gemäß einer bevorzugten Ausführungsform weist die Gitterstruktur eine Vielzahl von fein strukturierten Teilbereichen auf, die vorzugsweise die Form einer Linie aufweisen. Mithilfe dieser Linien kann ein beliebiges Linienmotiv erzeugt werden, das unter bestimmten Betrachtungsbedingungen in einer oder mehreren Farben erscheint. Die Gitterstruktur weist vorzugsweise weitere Linienmotive auf, die ebenfalls mit Nullte-Ordnung-Beugungsstrukturen belegt sind und so ausgebildet sind, dass beim Drehen oder Kippen der Gitterstruktur die mit den unterschiedlichen Nullte-Ordnung-Beugungsstrukturen belegten Linienmotive nacheinander aufleuchten. Damit können auch bewegte bzw. pulsierende Motive simuliert werden.

Gemäß einer weiteren Ausführungsform können die Teilbereiche der Gitterstruktur die Form eines Rasterelements, wie eines Punktes, Dreieckszeichens etc., aufweisen. Beispielsweise können die Rasterelemente, deren Abmessungen zumindest in einer Richtung unterhalb des Auflösungsvermögens des Auges liegen, mit unterschiedlichen Nullte-Ordnung-Beugungsstrukturen belegt werden. Die Wahl der einzelnen Nullte-Ordnung-Beugungsstrukturen sowie deren Anordnung kann dabei wieder so gewählt werden, dass sie zusammen ein Motiv bilden, das beim Drehen oder Kippen seine Farbe bzw. den Informationsgehalt wechselt.

Die einzelnen Nullte-Ordnung-Beugungsstrukturen können sich dabei hinsichtlich der Gitterkonstanten, des Profils und insbesondere der Profiltiefe unterscheiden.

Gemäß einer weiteren Ausführungsform weist die Gitterstruktur wenigstens eine Gruppe von unterschiedlichen Teilbereichen auf, die unter einer bestimmten Betrachtungsrichtung die Grundfarben erzeugen und die so zusammengesetzt sind, dass diese Gruppe eine farbige, visuell erkennbare Information darstellt. D.h., man wählt beispielsweise drei Nullte-Ordnung-Beugungsstrukturen, die unter einer bestimmten Betrachtungsrichtung jeweils die Grundfarben Rot, Grün, Blau erzeugen. Durch entsprechendes Zusammensetzen dieser Elemente können beliebige nach dem RGB-System in der Natur vorkommende Farbschattierungen erzeugt werden.

Die Gitterstruktur kann jedoch auch so ausgebildet sein, dass beim Kippen bzw. Drehen der Gitterstruktur jeweils eine Ansicht eines Gegenstandes auftritt. Die Ansicht ist dabei so gewählt, dass ein Stereo-Effekt auftritt, d.h., der dargestellte Gegenstand wirkt dreidimensional. Bei einer speziellen Ausführungsform ist die Gitterstruktur so ausgelegt, dass beim Kippen um jeweils 13° eine dieser Ansichten des Gegenstandes auftritt, da bei normalem Betrachtungsabstand von ca. 30 cm zwischen den menschlichen Augen ein Winkel von ca. 30° liegt.

Wenn der Kippwinkel größer als 13° ist, kann die Gitterstruktur mit beiden Augen gleichzeitig mit einer Lupe betrachtet werden, z.B. für eine dreifache Lupe ist ein Kippwinkel von 35° optimal.

Nullte-Ordnung-Beugungsstrukturen polarisieren einfallendes Licht je nach Azimutwinkel unterschiedlich. Dieser Effekt kann ebenfalls zur Erzeugung eines Stereoeffekts genutzt werden. Zu diesem Zweck wird, wie bereits erläutert, die für das eine Auge (z.B. das linke Auge) bestimmte Ansicht des darzustellenden Gegenstandes bzw. Bildes mit dem Azimutwinkel 0° und die für das andere Auge (z.B. das rechte) bestimmte Ansicht mit dem Azimutwinkel 90° erzeugt. Bei Betrachtung dieses Bildes mit einer Stereobrille, die links ein Polarisationsfilter für 0° und rechts eines für 90° aufweist, erscheint die Gitterstruktur bzw. das Bild dreidimensional.

Neben den bereits beschriebenen Teilbereichen, die mit einer entsprechenden Nullten-Ordnung-Beugungsstruktur belegt sind, kann die Gitterstruktur auch Teilbereiche aufweisen, die eine Erste-Ordnung-Beugungsstruktur aufweisen. Auch diese Teilbereiche können eine Ausdehnung aufweisen, die in wenigstens einer Richtung kleiner als 0,5 mm ist und in Form von Linien oder beliebigen Rasterelementen ausgeführt sein. Bei diesen Erste-Ordnung-Beugungsstrukturen kann es sich beispielsweise um kinegrammartige Beugungsgitterstrukturen, echte Hologramme oder dergleichen handeln.

Die erfindungsgemäßen Gitterstrukturen werden vorzugsweise in Form einer Reliefstruktur auf Prägewerkzeugen vorbereitet, die anschließend in eine beliebige Schicht, wie beispielsweise eine thermoplastische Schicht oder eine Lackschicht, insbesondere eine UV-härtbare Lackschicht, geprägt werden. Die prägbare Schicht befindet sich vorzugsweise auf einem Trägermaterial, wie einer Kunststofffolie. Je nach Verwendungszweck kann die Kunststofffolie zusätzliche Schichten oder Sicherheitsmerkmale aufweisen. So kann die Kunststofffolie als Sicherheitsfaden oder Sicherheitsetikett eingesetzt werden. Alternativ kann die Kunststofffolie als Transfermaterial, wie beispielsweise in Form einer Heißprägefolie ausgestaltet sein, die zum Übertrag einzelner Sicherheitselemente auf zu sichernde Gegenstände dient.

Die Gitterstrukturen werden vorzugsweise zur Absicherung von Wertdokumenten, wie Banknoten, Ausweiskarten, Pässen und dergleichen, benutzt. Selbstverständlich können sie auch für andere zu sichernde Waren, wie CDs, Bücher, Flaschen etc., eingesetzt werden.

Die Herstellung derartiger Nullte-Ordnung-Gitterbilder erfolgt vorzugsweise mithilfe der Elektronenstrahllithographie, mit der Gitterlinien in der geforderten Feinheit erzeugt werden können. Besonders vorteilhaft lassen sich hierbei die in der DE 102 26115.6 und DE 102 26112.1 beschriebenen Verfahren anwenden, auf die hier ausdrücklich Bezug genommen wird.

Bei diesen Verfahren wird unter Berücksichtigung des darzustellenden Motivs und der zu verwendenden Gitterparameter ein Datensatz erstellt, mit welchem der Elektronenstrahl gesteuert wird. Das Schreiben bzw. Belichten der einzelnen Gitterlinien mit dem Elektronenstrahl erfolgt hierbei in vorgegebenen Arbeitsfeldern, deren Lage und Aneinanderreihung abhängig von den jeweiligen Datensätzen der Gitterstruktur gewählt wird, so dass möglichst wenig Diskontinuitäten in den einzelnen Gitterlinien auftreten. Denn diese Diskontinuitäten beeinträchtigen die Qualität der beobachtbaren Gitterstruktur. Die Belichtung erfolgt üblicherweise in einem Photoresist. Man unterscheidet hierbei Positivresist- und Negativresistschichten.

Der Begriff "Photoresist" bezeichnet daher im Sinne der Erfindung ein strahlungsempfindliches Material, dessen chemische Eigenschaften, insbesondere dessen Löslichkeitsverhalten, sich durch Einwirkung von Licht- oder Teilchenstrahlung ändert.

Als "Positiv-Resist" werden Photoresistmaterialien bezeichnet, die durch photochemischen Abbau oder Umwandlung von funktionellen Gruppen leicht löslich werden. D.h., die belichteten Partien werden bei der Weiterbehandlung weggelöst, die unbelichteten Partien dagegen bleiben stehen.

Als "Negativ-Resist" werden Photoresistmaterialien bezeichnet, die durch Vernetzung oder Photopolymerisation schwer löslich bis unlöslich werden. D.h., die unbelichteten Partien werden bei der Weiterbehandlung weggelöst, während die belichteten Partien stehen bleiben.

Weitere Ausführungsformen und Vorteile der Erfindung werden anhand der Figuren erläutert.

Es zeigen:
- Fig.1: ein erfindungsgemäßes Sicherheitselement,
- Fig. 2: ein erfindungsgemäßes Sicherheitselement in Form eines Sicherheitsfadens im Querschnitt,
- Fig. 3: ein erfindungsgemäßes Transfermaterial im Querschnitt,
- Fig. 4: eine erfindungsgemäße Gitterstruktur in Aufsicht,
- Fig. 5: Ausschnitt a aus der Gitterstruktur gemäß Fig. 4,
- Fig. 6: weitere Ausführungsform einer erfindungsgemäßen Gitterstruktur in Aufsicht,
- Fig. 7a - 7c: Einzeldarstellung von Gruppen von Teilbereichen mit der gleichen Beugungsstruktur der Gitterstruktur gemäß Fig. 6,
- Fig. 8a - 8d: Verfahrensschritte zur Herstellung der Gitterstruktur gemäß Fig. 6 unter Verwendung eines Negativ-Resist.

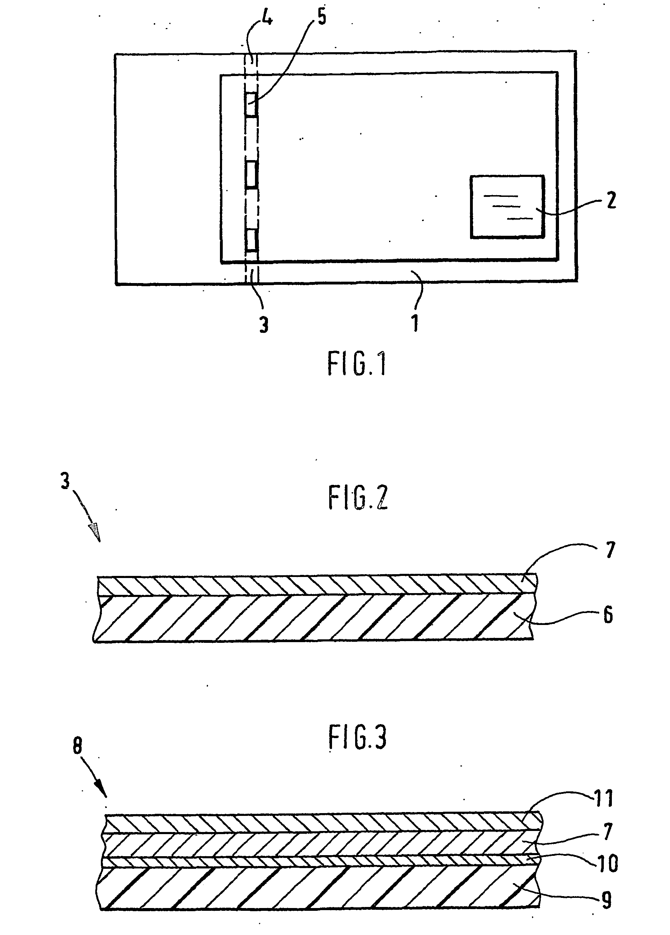

Fig.1 zeigt ein erfindungsgemäßes Sicherheitsdokument 1, hier eine Banknote, die ein erfindungsgemäßes Sicherheitselement 2 aufweist. Das Sicherheitselement 2 ist im gezeigten Beispiel in Form eines Patches auf die Banknote 1 aufgebracht. Selbstverständlich kann das Sicherheitselement 2 jede beliebige andere Form aufweisen. So kann es beispielsweise in Form eines Streifens, der über die gesamte Breite der Banknote verläuft, ausgebildet sein.

Alternativ kann das erfindungsgemäße Sicherheitselement 2 auch in Form eines Sicherheitsfadens in das Sicherheitsdokument eingebracht sein. Das Sicherheitsdokument 1 in Fig.1 weist ebenfalls einen derartigen Sicherheitsfaden 3 auf, der entweder eine erfindungsgemäße Gitterstruktur oder aber beliebige andere Sicherheitsmerkmale aufweisen kann. Der Sicherheitsfaden 3 wird vorteilhafterweise in Form eines so genannten "Fenstersicherheitsfadens" in das Sicherheitspapier der Banknote 1 quasi eingewebt. Die im Sicherheitspapier liegenden Bereiche 4 des Sicherheitsfadens 3 sind strichliert angedeutet, während die Fensterbereich 5 des Sicherheitsfadens 3 mit durchgezogenen Linien dargestellt sind.

Den prinzipiellen Schichtaufbau eines erfindungsgemäßen Sicherheitsfadens 3 zeigt Fig. 2 im Querschnitt. Er besteht im Wesentlichen aus einer Trägerschicht 6, vorzugsweise einer Kunststofffolie, auf welcher der Schichtaufbau 7 des Sicherheitselements aufgebracht ist. Der Sicherheitsfaden 3 kann selbstverständlich weitere Schichten oder Echtheits- bzw. Sicherheitsmerkmale, wie beispielsweise Lumineszenzstoffe, magnetische oder elektrisch leitfähige Merkmale, aufweisen. Diese sind jedoch in der Figur nicht dargestellt.

Ist das Sicherheitselement 2 dagegen in Form eines Patches oder Streifens auf den zu sichernden Gegenstand, wie hier die Banknote 1, aufgebracht, so wird es vorzugsweise in Form von Etikettenmaterial oder eines Transfermaterials vorbereitet, aus dem das Patch anschließend in der gewünschten Form ausgelöst und auf den zu sichernden Gegenstand übertragen wird.

Fig. 3 zeigt ein Beispiel für ein derartiges Transfermaterial 8. Das Transfermaterial 8 weist eine Trägerschicht 9, vorzugsweise eine Kunststofffolie, auf, auf welche der Schichtaufbau 7 des Sicherheitselements 2 in ablösbarer Form aufgebracht ist. Unter Umständen kann es notwendig sein, eine Trennschicht 10 zwischen dem Schichtaufbau 7 des Sicherheitselements 2 und der Trägerschicht 9 vorzusehen. Auf dem Schichtaufbau des Sicherheitselements 2 schließlich ist eine Kleberschicht 11 vorgesehen, mit welcher das Sicherheitselement 2 auf dem zu sichernden Gegenstand befestigt wird. Beim Übertrag wird das Transfermaterial 8 mit der Klebstoffschicht 11 auf den zu sichernden Gegenstand aufgelegt und das Sicherheitselement 2 in der gewünschten Form übertragen. Handelt es sich um eine Heißprägefolie, so wird eine Heißschmelzkleberschicht 11 verwendet, die in den zu übertragenden Bereichen durch Wärme aktiviert wird. Anschließend wird das Transfermaterial von dem zu sichernden Gegenstand entfernt und nur der Schichtaufbau 7 des Sicherheitselements 2 verbleibt auf dem Gegenstand.

Sofern das Sicherheitselement 2 in Form von Etikettenmaterial vorliegt, besitzt es prinzipiell den gleichen Aufbau wie das Transfermaterial 8. Es unterscheidet sich lediglich dadurch, dass es keine Trennschicht 10 aufweist, und der Schichtaufbau 7 des Sicherheitselements 2 unlösbar mit der Trägerschicht 9 verbunden ist. Das Etikettenmaterial kann jedoch auf der klebstoffbeschichteten Seite mit einer Folie abgedeckt sein, die unter Umständen ebenfalls eine Trennschicht, z.B. eine Silikonschicht, trägt.

Der Schichtaufbau 7 des Sicherheitselements 2 kann gemäß der Erfindung ein- oder mehrschichtig sein. Im einfachsten Fall besteht der Schichtaufbau 7 lediglich aus einer Kunststoffschicht, wie beispielsweise einer Lackschicht, in welcher die erfindungsgemäße Gitterstruktur in Form einer Reliefstruktur vorliegt. Diese Schicht kann z.B. mit einer reflektierenden Schicht aus Metall oder hoch brechendem Material kombiniert sein.

Selbstverständlich kann auch das Transfermaterial bzw. Etikettenmaterial weitere Schichten aufweisen, in denen beispielsweise weitere Sicherheitsmerkmale angeordnet sind.

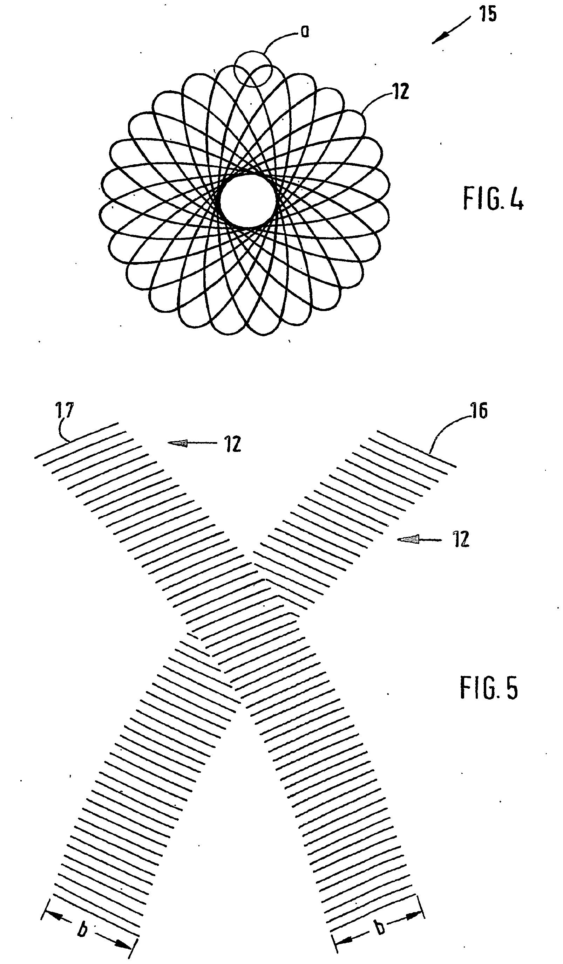

In Fig. 4 ist schematisch die Gitterstruktur 15 eines erfindungsgemäßen Sicherheitselements 2 in Aufsicht dargestellt. Die Gitterstruktur 15 setzt sich im gezeigten Beispiel aus fein strukturierten Guillochelinien 12 zusammen, deren Breite kleiner 0,5 mm ist. Bei dieser Gitterstruktur 15 sind die einzelnen Guillochelinien 12 durch unterschiedliche Nullte-Ordnung-Beugungsstrukturen dargestellt. Diese unterschiedlichen Nullte-Ordnung-Beugungsstrukturen können sich hinsichtlich ihrer Beugungsgitterparameter so unterscheiden, dass unter einem bestimmten Betrachtungswinkel lediglich ein Teil der Guillochelinien 12 zu erkennen ist, und die sichtbaren Guillochelinien 12 unterschiedliche Farbe zeigen. Beim Ändern des Betrachtungswinkels werden andere Guillochelinien 12 sichtbar und die Farben der einzelnen Guillochelinien 12 ändern sich. Die Nullte-Ordnung-Beugungsstrukturen können jedoch auch so ausgestaltet sein, dass alle Guillochelinien 12 unter jedem Betrachtungswinkel erkennbar sind und sich nur hinsichtlich ihrer Farbe unterscheiden. In diesem Fall tritt beim Ändern des Betrachtungswinkels lediglich ein Farbwechselspiel auf.

In Fig. 5 ist der Ausschnitt a gemäß Fig. 4 in starker Vergrößerung dargestellt, so dass die einzelnen Beugungsgitterlinien 16, 17 der einzelnen Guillochelinien 12 zu erkennen sind. Die Länge der Beugungsgitterlinien 16, 17 bestimmt dabei die Breite b der einzelnen Guillochelinien 12. Im gezeigten Beispiel haben die Guillochelinien 12 alle die gleiche Breite b. Diese Breite ist erfindungsgemäß kleiner 0,5 mm, vorzugsweise liegt die Breite der Guillochelinien 12 jedoch unterhalb des Auflösungsvermögens des Auges, insbesondere unterhalb von 0,2 mm.

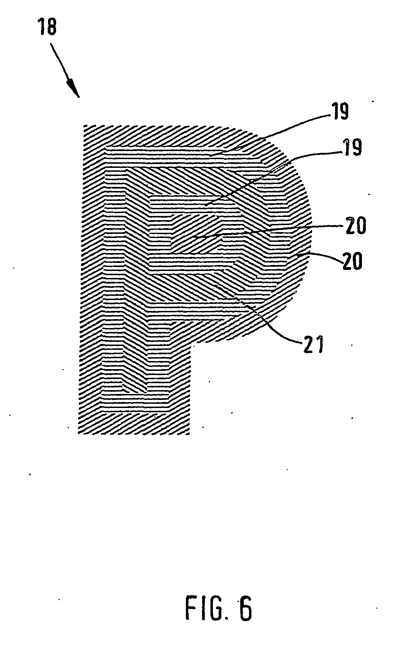

In Fig. 6 ist eine weitere Ausführungsform der erfindungsgemäßen Gitterstruktur 18 in Aufsicht dargestellt. Diese Gitterstruktur 18 weist die Umrissform des Buchstabens "P" auf. Diese Gitterstruktur 18 zeigt beim Drehen oder Kippen der Gitterstruktur einen so genannten "Pumpeffekt", d.h. das "P" dehnt sich aus oder zieht sich zusammen und wechselt dabei gegebenenfalls die Farbe.

Um diesen visuellen Effekt zu erreichen, wird die Gitterstruktur 18 aus unterschiedlichen Teilbereichen 19, 20, 21 zusammengesetzt, die jeweils mit unterschiedlichen Nullte-Ordnung-Beugungsstrukturen belegt sind.

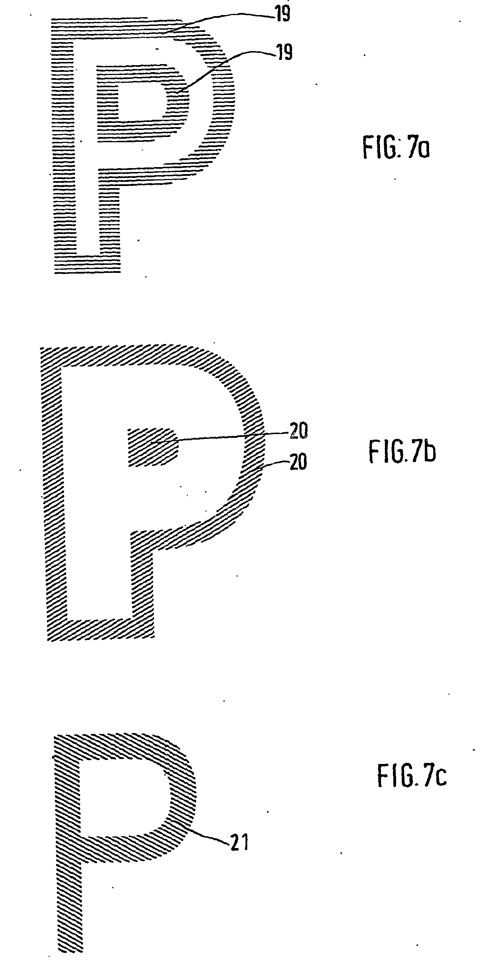

Diese Teilbereiche 19, 20, 21 sind aus Gründen der Anschaulichkeit nochmals in den Figuren 7a bis 7c einzeln dargestellt. Die in den Teilbereichen 19, 20, 21 angeordneten Nullte-Ordnung-Beugungsstrukturen unterscheiden sich dabei hinsichtlich ihrer Gitterkonstante und/oder dem Azimutwinkel und/oder der Profilform und/oder der Profiltiefe.

Gemäß einem konkreten Beispiel können die Teilbereiche 19 mit einer Nullte-Ordnung-Beugungsstruktur belegt sein, die eine Gitterkonstante von 400 nm, einen Azimutwinkel von 0° sowie ein trapezförmiges Profil mit ca. 3° Seitenschräge und einer Profiltiefe von 200 nm aufweist. Die Teilbereiche 20 dagegen werden mit einer Nullte-Ordnung-Beugungsstruktur belegt, die eine Gitterkonstante von 350 nm, einen Azimutwinkel von 30° sowie eine Profiltiefe von 150 nm aufweist. Das Profil ist ebenfalls trapezförmig und weist eine Seitenschräge von ca. 3° auf. Der Teilbereich 21 schließlich weist die gleichen Gitterparameter auf, die auch für die Nullte-Ordnung-Beugungsstrukturen der Teilbereiche 20 gewählt wurden. Sie unterscheiden sich lediglich hinsichtlich des Azimutwinkels, der für den Teilbereich 21 minus 30° bzw. 330° beträgt.

Die Herstellung dieser Gitterstruktur 18 wird schematisch anhand der Fig. 8a bis 8d erläutert. In einem ersten Verfahrensschritt wird ein elektronischer Datensatz erzeugt, der Informationen über die Umrissform der einzelnen Teilbereiche 19, 20 und 21 enthält, sowie über die Beugungsgitterparameter der den einzelnen Teilbereichen 19, 20, 21 zugeordneten Nullte-Ordnung-Beugungsstrukturen. Dieser Datensatz wird für die Belichtung mit einem Elektronenstrahl bereitgestellt. Für die Belichtung wird, wie in Fig. 8a dargestellt, eine mit einer 20 nm dicken Chromschicht besputterte Glasplatte 22 mit einer Negativresistschicht 23 von 200 nm Dicke beschichtet. Durch Tests wird ermittelt, bei welchen Elektronenstrahldaten (Spannung, Stromfokussierung etc.) eine Flankensteilheit von ca. 3° bei durchbelichteter Resistschicht entsteht. Mit den so gefundenen Elektronenstrahldaten wird nunmehr der Negativ-Resist 23 belichtet, wobei der Elektronenstrahl 24 entsprechend dem zu den Teilbereichen 19 (Fig. 7a) gehörenden Datensatz gesteuert wird. Die belichteten Bereiche der Negativresistschicht 23 sind in Fig. 8a als strichlierte Bereiche 25 dargestellt.

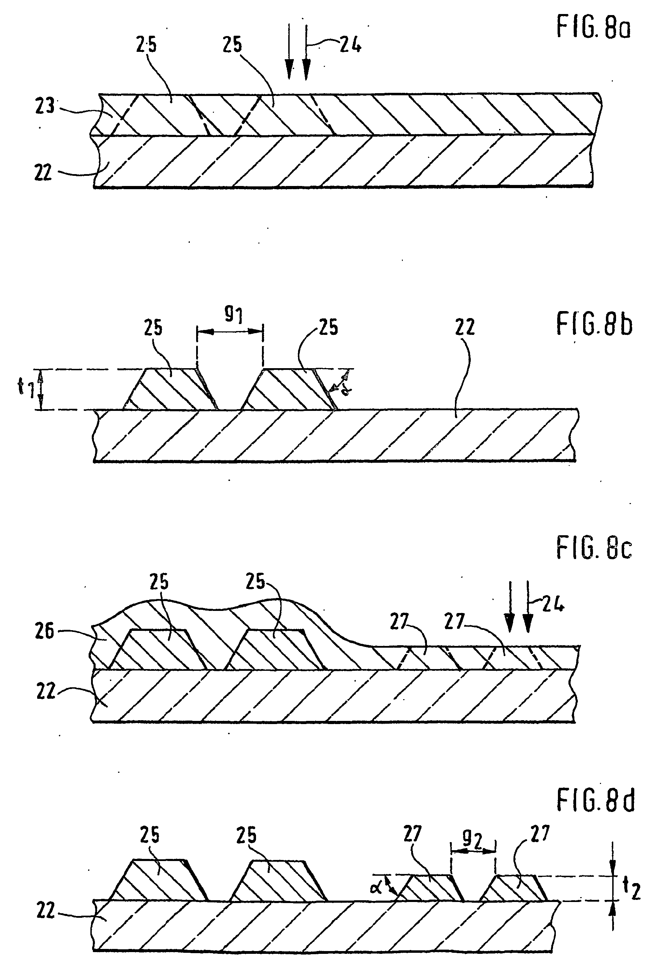

Der Negativ-Resist 23 wird anschließend entwickelt, wobei die nicht belichteten Bereiche weggelöst werden und lediglich die belichteten Bereiche 25 auf der Glasplatte 22 verbleiben. Dies ist in Fig. 8b dargestellt. Die belichteten Bereiche 25 haben ein trapezförmiges Profil mit einer Flankensteilheit α sowie eine Profiltiefe t₁. Der Abstand der einzelnen belichteten Bereiche 25 bildet die Gitterkonstante g₁. Im Falle des oben genannten konkreten Beispiels beträgt α ca. 10°, t₁ 200 nm und g₁, wie für die Teilbereiche 19 vorgesehen, 400 nm.

Im nächsten Schritt wird eine zweite Negativresistschicht 26 mit einer Schichtstärke von 150 nm auf die Glasplatte 22 sowie die belichteten Bereiche 25 aufgebracht. Wie in Fig. 8c dargestellt, wird dieser Negativ-Resist 26 ebenfalls mit dem Elektronenstrahl 24 belichtet, wobei der Elektronenstrahl hierbei gemäß den Datensätzen gesteuert wird, die zu den Teilbereichen 20 bzw. 21 gehören. Auch hier sind die belichteten Bereiche durch strichlierte Bereiche 27 angedeutet. Nach der Entwicklung dieser zweiten Negativresistschicht 26 verbleiben auch hier lediglich die belichteten Bereiche 27 auf der Glasplatte 22. Sie weisen ebenfalls ein trapezförmiges Profil mit einer Flankensteilheit α von 3° auf. Die Gitterkonstante g₂ sowie die Profiltiefe t₂ unterscheiden sich allerdings von den Parametern der belichteten Bereiche 25. Gemäß dem vorgegebenen Datensatz beträgt die Gitterkonstante g₂ 350 nm und die Profiltiefe t₂150 nm. Die auf diese Weise behandelte Glasplatte 22 ist in Fig. 8d dargestellt und bildet den Resistmaster der erfindungsgemäßen Gitterstruktur 18.

Von diesem Resistmaster wird üblicherweise ein Nickelgalvanik-Shim erzeugt, das zum Prägen einer verformbaren Lack- oder Kunststoffschicht benutzt wird. Von dieser geprägten Schicht werden weitere Nickel-Shims hergestellt, die für die Herstellung der erfindungsgemäßen Sicherheitselemente verwendet werden. Dabei wird mit dem Nickel-Shim ebenfalls eine Kunststoffschicht, wie beispielsweise eine Lackschicht, geprägt. Anschließend wird diese geprägte Kunststoffschicht vorzugsweise mit hoch brechendem Material, wie beispielsweise Zinksulfid, oder einem Metall, wie beispielsweise Aluminium, bedampft. Gegebenenfalls kann die aufgedampfte Schicht nochmals überlackiert werden. Wie bereits erläutert, kann das Sicherheitselement entsprechend seinem Verwendungszweck weitere Schichten aufweisen.

Selbstverständlich kann das oben beschriebene Verfahren auch mithilfe eines Positiv-Resist durchgeführt werden. Das oben beschriebene Herstellverfahren hat dabei den Vorteil, dass hiermit auch fein strukturierte Teilbereiche mit einer Ausdehnung kleiner 0,2 mm mit einer Nullte-Ordnung-Beugungsstruktur belegt werden können.

## Patentansprüche

1. Gitterstruktur zur Absicherung von Wertgegenständen (1), die wenigstens einen ersten Teilbereich (19;20;21) mit einer Gitterkonstante aufweist, die kleiner ist als die Wellenlänge, bei welcher der Teilbereich betrachtet wird, wobei die Gitterstruktur in diesem Teilbereich (19;20;21) in Form einer Reliefstruktur mit einer definierten Reliefhöhe vorliegt, so dass bei Betrachtung in einem bestimmten Spektralbereich ein Nullte-Ordnung-Gitterbild beobachtbar ist, **dadurch gekennzeichnet, dass** der Teilbereich (19;20;21) die Form einer Linie und in wenigstens einer Richtung eine Ausdehnung kleiner 0,5 mm aufweist.

2. Gitterstruktur nach Anspruch 1, **dadurch gekennzeichnet, dass** das Nullte-Ordnung-Gitterbild im visuellen Spektralbereich beobachtbar ist.

3. Gitterstruktur nach Anspruch 2, **dadurch gekennzeichnet, dass** die Gitterkonstante kleiner als 450 nm ist.

4. Gitterstruktur nach wenigsten einem der Ansprüche 1 bis 3, **dadurch gekennzeichnet, dass** der Teilbereich in wenigstens einer Richtung eine Ausdehnung aufweist, die unterhalb des Auflösungsvermögens des Auges, vorzugsweise unterhalb 0,2 mm, liegt.

5. Gitterstruktur nach wenigstens einem der Ansprüche 1 bis 4, **dadurch gekennzeichnet, dass** die Gitterstruktur mehrere Teilbereiche aufweist, die in wenigstens einer Richtung eine Ausdehnung kleiner 0,5 mm aufweisen.

6. Gitterstruktur nach wenigstens einem der Ansprüche 1 bis 5, **dadurch gekennzeichnet, dass** die Gitterstruktur wenigstens einen zweiten Teilbereich (19;20;21) aufweist, in dem eine Erste-Ordnung-Beugungstruktur angeordnet ist.

7. Gitterstruktur nach Anspruch 6, **dadurch gekennzeichnet, dass** der zweite Teilbereich (19;20;21) ebenfalls in wenigstens einer Richtung eine Ausdehnung kleiner 0,5 mm, vorzugsweise unterhalb des Auflösungsvermögens des Auges, insbesondere unterhalb 0,2 mm, aufweist.

8. Gitterstruktur nach wenigstens einem der Ansprüche 1 bis 7, **dadurch gekennzeichnet, dass** der zweite Teilbereich (19;20;21) die Form einer Linie aufweist.

9. Gitterstruktur nach wenigstens einem der Ansprüche 1 bis 8, **dadurch gekennzeichnet, dass** die Gitterstruktur mehrere erste und/oder zweite Teilbereich (19;20;21) in Form einer Linie aufweist, die unter einem bestimmten Betrachtungswinkel unterschiedliche Farben aufweisen.

10. Gitterstruktur nach wenigstens einem der Ansprüche 1 bis 9, **dadurch gekennzeichnet, dass** der zweite Teilbereich (19,20;21) die Form eines Rasterelements, wie eines Punktes, Dreiecks, Zeichens etc., aufweist.

11. Gitterstruktur nach wenigstens einem der Ansprüche 1 bis 10, **dadurch gekennzeichnet, dass** die Gitterstruktur wenigstens eine Gruppe von ersten und/oder zweiten Teilbereichen aufweist, die eine visuell erkennbare Information darstellt.

12. Gitterstruktur nach Anspruch 11, **dadurch gekennzeichnet, dass** sich wenigstens zwei der Teilbereiche (19;20;21) hinsichtlich eines oder mehrerer beugungsoptischer Parameter unterscheiden.

13. Gitterstruktur nach wenigstens einem der Ansprüche 1 bis 12, **dadurch gekennzeichnet, dass** die Gitterstruktur wenigstens eine Gruppe von unterschiedlichen ersten und/ oder zweiten Teilbereichen (19;20;21) aufweist, die unter einer bestimmten Betrachtungsrichtung die Grundfarben erzeugen, und die so zusammengesetzt sind, dass diese Gruppe eine farbige visuell erkennbare Information darstellt.

14. Gitterstruktur nach wenigstens einem der Ansprüche 1 bis 13, **dadurch gekennzeichnet, dass** die ersten und/oder zweiten Teilbereiche (19;20;21) beim Kippen oder Drehen der Gitterstruktur ihre Farbe ändern.

15. Gitterstruktur nach wenigstens einem der Ansprüche 1 bis 14, **dadurch gekennzeichnet, dass** die Gitterstruktur wenigstens zwei Gruppen von ersten Teilbereichen (19;20;21) aufweist, die jeweils die Teilansicht eines Gegenstandes darstellen, wobei die Teilbereiche (19;20;21) so angeordnet sind, dass der dargestellte Gegenstand beim Kippen der Gitterstruktur dreidimensional wirkt.

16. Transfermaterial, insbesondere Heißprägefolie mit wenigstens einem Gitterbild gemäß wenigstens einem der Ansprüche 1 bis 15.

17. Sicherheitselement (2) mit einer Gitterstruktur gemäß wenigstens einem der Ansprüche 1 bis 15.

18. Sicherheitselement (2) nach Anspruch 17, **dadurch gekennzeichnet, dass** das Sicherheitselement (2) ein Sicherheitsfaden (3), ein Etikett oder ein Transferelement ist.

19. Sicherheitspapier mit einer Gitterstruktur gemäß wenigstens einem der Ansprüche 1 bis 15.

20. Sicherheitspapier mit einem Sicherheitselement (2) gemäß Anspruch 17 oder 18.

21. Sicherheitsdokument mit einer Gitterstruktur gemäß wenigstens einem der Ansprüche 1 bis 15.

22. Sicherheitsdokument mit einem Sicherheitselement (2) gemäß Anspruch 17 oder 18.

23. Sicherheitsdokument mit einem Sicherheitspapier gemäß Anspruch 19 oder 20.

24. Verfahren zur Herstellung einer Gitterstruktur gemäß wenigstens einem der Ansprüche 1 bis 15, **dadurch gekennzeichnet, dass** der Teilbereich (19;20;21) mit einem Elektronenstrahl erzeugt wird, der anhand eines Datensatzes gesteuert wird, der Informationen über die Umrissform des Teilbereichs (19;20;21) sowie über die Gitterparameter der innerhalb dieser Umrissform angeordneten Nullte-Ordnung-Beugungsstruktur enthält.

25. Verfahren nach Anspruch 24, **dadurch gekennzeichnet, dass** mehrere Teilbereiche (19;20;21) mit unterschiedlichen Nullte-Ordnung-Beugungsstrukturen erzeugt werden.

26. Verfahren nach Anspruch 24 oder 25, **dadurch gekennzeichnet, dass** für die Erzeugung der unterschiedlichen Teilbereiche (19;20;21) auf ein Substrat eine erste Photoresistschicht mit einer ersten Schichtdicke aufgebracht wird, in welche die Nullte-Ordnung-Beugungsstrukturen wenigstens eines Teilbereichs (19;20;21) belichtet werden, und dass nach der Entwicklung der ersten Photoresistschicht wenigstens eine zweite Photoresistschicht mit einer zweiten Schichtdicke auf das Substrat aufgebracht wird, in welche die Nullte-Ordnung-Beugungsstruktur wenigstens eines zweiten Teilbereichs (19;20;21) belichtet wird.

## Claims

1. Grating structure for securing objects of value (1), having at least one partial area (19; 20; 21) with a grating constant which is smaller than the wavelength at which the partial area is viewed, wherein the grating structure within this partial area (19; 20; 21) is present in the form of a relief structure of a defined relief height, so that when viewed in a certain spectral range, a zero-order grating image is observable, **characterized in that** the partial area (19; 20; 21) has the shape of a line and in at least one direction an extension smaller than 0.5 mm.

2. Grating structure according to claim 1, **characterized in that** the zero-order grating image is observable in the visual spectral range.

3. Grating structure according to claim 2, **characterized in that** the grating constant is smaller than 450 nm.

4. Grating structure according to at least one of claims 1 to 3, **characterized in that** the partial area has in at least one direction an extension which is below the resolving power of the eye, preferably below 0.2 mm.

5. Grating structure according to at least one of claims 1 to 4, **characterized in that** the grating structure has several partial areas, which have in at least one direction an extension smaller than 0.5 mm.

6. Grating structure according to at least one of claims 1 to 5, **characterized in that** the grating structure has at least one second partial area (19; 20; 21), in which a first-order diffraction structure is disposed.

7. Grating structure according to claim 6, **characterized in that** the second partial area (19; 20; 21) also has in at least one direction an extension smaller than 0.5 mm, preferably below the resolution power of the eye, in particular below 0.2 mm.

8. Grating structure according to at least one of claims 1 to 7, **characterized in that** the second partial area (19; 20; 21) has the shape of a line.

9. Grating structure according to at least one of claims 1 to 8, **characterized in that** the grating structure has several first and/or second partial areas (19; 20; 21) in shape of a line, which have different colors at a certain viewing angle.

10. Grating structure to at least one of claims 1 to 9, **characterized in that** the second partial area (19; 20; 21) has the shape of a raster element, like a dot, a triangle, a character etc.

11. Grating structure according to at least one of claims 1 to 10, **characterized in that** the grating structure hast at least one group of first and/or second partial areas, representing a visually recognizable information.

12. Grating structure according to claim 11, **characterized in that** at least two of the partial areas (19; 20; 21) differ in one or several diffractive parameters.

13. Grating structure according to at least one of claims 1 to 12, **characterized in that** the grating structure has at least one group of different first and/or second partial areas (19; 20; 21), which produce the primary colors in a certain viewing direction, and which are arranged in such a way that this group represents a colored visually recognizable information.

14. Grating structure according to at least one of claims 1 to 13, **characterized in that** the first and/or second partial areas (19; 20; 21) change their color when the grating structure is tilted or rotated.

15. Grating structure according to at least one of claims 1 to 14, **characterized in that** the grating structure has at least two groups of first partial areas (19; 20; 21) which form the partial view of an object respectively, wherein the partial areas (19; 20; 21) are arranged in such a way that the object formed appears three-dimensional when the grating structure is tilted.

16. Transfer material, in particular hot stamping foil, with at least one grating image according to at least one of claims 1 to 15.

17. Security element (2) with a grating structure according to at least one of claims 1 to 15.

18. Security element (2) according to claim 17, **characterized in that** the security element (2) is a security thread (3), a label or a transfer element.

19. Security paper with a grating structure according to at least one of claims 1 to 15.

20. Security paper with a security element (2) according to claim 17 or 18.

21. Security document with a grating structure according to at least one of claims 1 to 15.

22. Security document with a security element (2) according to claim 17 or 18.

23. Security document with a security paper according to claim 19 or 20.

24. Method for producing a grating structure according to at least one of claims 1 to 15, **characterized in that** the partial area (19; 20; 21) is produced by means of an electron beam, which is controlled on the basis of a data set containing information concerning the outline shape of the partial area (19; 20; 21) as well as the grating parameters of the zero-order diffraction structure disposed within this outline shape.

25. Method according to claim 24, **characterized in that** several partial areas (19; 20; 21) with different zero-order diffraction structures are produced.

26. Method according to claim 24 or 25, **characterized in that** for producing the different partial areas (19; 20; 21), a first photoresist layer with a first layer thickness is applied to a substrate, into which first photoresist layer the zero-order diffraction structures of at least one partial area (19; 20; 21) are exposed, and that after developing the first photoresist layer at least one second photoresist layer with a second layer thickness is applied to the substrate, into which second photoresist layer the zero-order diffraction structure of at least a second partial area (19; 20; 21) is exposed.

## Revendications

1. Structure de réseau destinée à protéger des objets de valeur (1), qui comprend au moins une première zone partielle (19 ; 20 ; 21) dotée d'une constante de réseau qui est inférieure à la longueur d'onde, dans laquelle la zone partielle est observée, la structure de réseau étant présente dans cette zone partielle (19 ; 20 ; 21) sous forme d'une structure de relief avec une hauteur de relief définie, de sorte que lorsque l'observation a lieu dans une zone spectrale définie, il est possible de visualiser une image de réseau d'ordre zéro, **caractérisée en ce que** la zone partielle (19 ; 20 ; 21) présente la forme d'une ligne et dans au moins une direction une étendue qui est inférieure à 0,5 mm.

2. Structure de réseau selon la revendication 1, **caractérisée en ce que** l'image réseau d'ordre zéro peut être observée dans la zone spectrale visuelle.

3. Structure de réseau selon la revendication 2, **caractérisée en ce que** la constante de réseau est inférieure à 450 nm.

4. Structure de réseau selon au moins l'une quelconque des revendications 1 à 3, **caractérisée en ce que** la zone partielle comprend dans au moins une direction une étendue qui est inférieure au pouvoir séparateur de l'oeil, de préférence inférieure à 0,2 mm.

5. Structure de réseau selon au moins l'une quelconque des revendications 1 à 4, **caractérisée en ce que** la structure de réseau comprend plusieurs zones partielles qui comprennent dans au moins une direction une étendue inférieure à 0,5 mm.

6. Structure de réseau selon au moins l'une quelconque des revendications 1 à 5, **caractérisée en ce que** la structure de réseau comprend au moins une seconde zone partielle (19 ; 20 ; 21) dans laquelle est disposée une structure de diffraction de premier ordre.

7. Structure de réseau selon la revendication 6, **caractérisée en ce que** la seconde zone partielle (19 ; 20 ; 21) comprend également dans au moins une direction une étendue inférieure à 0,5 mm, de préférence inférieure au pouvoir séparateur de l'oeil, en particulier inférieure à 0,2 mm.

8. Structure de réseau selon au moins l'une quelconque des revendications 1 à 7, **caractérisée en ce que** la seconde zone partielle (19 ; 20 ; 21) présente la forme d'une ligne.

9. Structure de réseau selon au moins l'une quelconque des revendications 1 à 8, **caractérisée en ce que** la structure de réseau comprend plusieurs premières et/ou secondes zones partielles (19 ; 20 ; 21) sous forme d'une ligne, qui comprennent différentes couleurs sous un angle d'observation défini.

10. Structure de réseau selon au moins l'une quelconque des revendications 1 à 9, **caractérisée en ce que** la seconde zone partielle (19 ; 20 ; 21) présente la forme d'un élément de trame comme un point, un triangle, un caractère etc.

11. Structure de réseau selon au moins l'une quelconque des revendications 1 à 10, **caractérisée en ce que** la structure de réseau comprend au moins un groupe de premières et/ou secondes zones partielles qui représente une information visuellement reconnaissable.

12. Structure de réseau selon la revendication 11, **caractérisée en ce qu'**au moins deux des zones partielles (19 ; 20 ; 21) diffèrent en ce qui concerne un ou plusieurs paramètre(s) d'optique de diffraction.

13. Structure de réseau selon au moins l'une quelconque des revendications 1 à 12, **caractérisée en ce que** la structure de réseau comprend au moins un groupe de différentes premières et/ou secondes zones partielles (19 ; 20 ; 21), qui produisent les couleurs primaires dans une direction d'observation définie, et qui sont assemblées de sorte que ce groupe représente une information chromatique visuellement reconnaissable.

14. Structure de réseau selon au moins l'une quelconque des revendications 1 à 13, **caractérisée en ce que** les premières et/ou secondes zones partielles (19 ; 20 ; 21) modifient leur couleur lors du basculement ou de la rotation de la structure de réseau.

15. Structure de réseau selon au moins l'une quelconque des revendications 1 à 14, **caractérisée en ce que** la structure de réseau comprend au moins deux groupes de premières zones partielles (19 ; 20 ; 21), qui représentent respectivement la vue partielle d'un objet, les zones partielles (19 ; 20 ; 21) étant disposées de sorte que l'objet représenté donne une impression tridimensionnelle lors du basculement de la structure de réseau.

16. Matériau de transfert, en particulier film estampé à chaud comprenant au moins une image de réseau selon au moins l'une quelconque des revendications 1 à 15.

17. Elément de sécurité (2) comprenant une structure de réseau selon l'une quelconque des revendications 1 à 15.

18. Elément de sécurité (2) selon la revendication 17, **caractérisé en ce que** l'élément de sécurité (2) est un fil de sécurité (3), une étiquette ou un élément de transfert.

19. Papier sécurisé comprenant une structure de réseau selon au moins l'une quelconque des revendications 1 à 15.

20. Papier sécurisé comprenant un élément de sécurité (2) selon la revendication 17 ou 18.

21. Document sécurisé comprenant une structure de réseau selon au moins l'une quelconque des revendications 1 à 15.

22. Document sécurisé comprenant un élément de sécurité (2) selon la revendication 17 ou 18.

23. Document sécurisé comprenant un papier sécurisé selon la revendication 19 ou 20.

24. Procédé de fabrication d'une structure de réseau selon au moins l'une quelconque des revendications 1 à 15, **caractérisé en ce que** la zone partielle (19 ; 20 ; 21) est produite avec un faisceau d'électrons, qui est commandé au moyen d'un enregistrement, qui contient des informations sur la forme de contour de la zone partielle (19 ; 20 ; 21) ainsi que sur les paramètres de réseau de la structure de diffraction d'ordre zéro disposée à l'intérieur de cette forme de contour.

25. Procédé selon la revendication 24, **caractérisé en ce que** plusieurs zones partielles (19 ; 20 ; 21) sont produites avec différentes structures de diffraction d'ordre zéro.

26. Procédé selon la revendication 24 ou 25, **caractérisé en ce que** pour produire les différentes zones partielles (19 ; 20 ; 21), une première couche de résine photosensible dotée d'une première épaisseur de couche est appliquée sur un substrat, couche dans laquelle les structures de diffraction d'ordre zéro d'au moins une zone partielle (19 ; 20 ; 21) sont exposées, et **en ce qu'**après le développement de la première couche de résine photosensible, au moins une seconde couche de résine photosensible dotée d'une seconde épaisseur de couche est appliquée sur le substrat, couche dans laquelle la structure de diffraction d'ordre zéro d'au moins une seconde zone partielle (19 ; 20 ; 21) est exposée.
